# FASCICULE DE BREVET EUROPEEN

(11) **EP 4 187 206 B1**
(45) Date de publication et mention de la délivrance du brevet: **03.04.2024**
(21) Numéro de dépôt: 22197466.0
(22) Date de dépôt: 23.09.2022
(51) Int. Cl.: G01C 23/00, G01D 13/06

(54) **INDICATEUR DE HAUTEUR AYANT UNE ECHELLE DE HAUTEUR LINEAIRE PAR MORCEAUX**
HÖHENANZEIGER MIT STÜCKWEISE LINEARER HÖHENSKALA
HEIGHT GAUGE HAVING A PIECEWISE LINEAR HEIGHT SCALE

(30) Priorité: 29.11.2021 FR 2112360
(43) Date de publication de la demande: 31.05.2023
(73) Titulaire: AIRBUS HELICOPTERS, 13725 Marignane Cedex (FR)
(72) Inventeur: BAUDRY, Jean-Pierre, 83200 TOULON (FR); BLAISE, Jérémy, 13960 SAUSSET-LES-PINS (FR)
(74) Mandataire: GPI Brevets

(56) Documents cités:
- EP-A1- 3 514 496
- EP-A1- 3 572 774
- FR-A1- 2 770 904

## Description

La présente invention concerne un indicateur de hauteur ayant une échelle de hauteur qui est linéaire par morceaux, et un aéronef muni d'un tel indicateur.

Un pilote d'un aéronef surveille la hauteur de l'aéronef par rapport au sol, en particulier lorsque l'aéronef se trouve près du sol et/ou d'obstacles.

A cet effet, un aéronef est usuellement muni d'un indicateur fournissant la hauteur de cet aéronef.

Eventuellement, un indicateur peut présenter dans une même page des symboles porteurs de la vitesse verticale et des symboles porteurs de la hauteur. Cette page peut être affichée sur un écran éventuellement multifonctions, une visière d'un casque, un collimateur tête haute ou similaires.

En outre, des alertes de passage de hauteur seuil peuvent être générées. Selon un premier exemple, le passage en dessous d'une première hauteur seuil peut être signalé durant une approche avant l'atterrissage. Une telle première hauteur est parfois dénommée « désignation Height » en langue anglaise. Selon un deuxième exemple, le passage en dessous d'une deuxième hauteur seuil peut être signalé durant une mission. Une telle deuxième hauteur est parfois dénommée « Tactical désignation Height » en langue anglaise et peut être supérieure à la première hauteur seuil.

Selon un autre aspect, la hauteur peut être mesurée de diverses manières. La hauteur peut être mesurée via un capteur radar nommé « radioaltimètre », à partir d'une base de données de terrain couplée à une position obtenue avec un système de positionnement par satellites, ou encore via un altimètre barométrique. Un radioaltimètre est intéressant à proximité du sol mais présente une précision qui décroit au fur et à mesure que la hauteur augmente.

Le document WO200431833 décrit un procédé et un appareil d'affichage d'un paramètre dynamique d'un aéronef. L'appareil comprend un dispositif d'affichage, qui reçoit un signal d'affichage et présente une échelle variant de manière dynamique et non linéaire, conformément à un algorithme d'affichage choisi conjointement avec une valeur de paramètre dynamique minimum et une valeur de paramètre dynamique maximum. Le dispositif d'affichage présente en outre un pointeur pointant vers cette échelle.

Le document WO200534368 décrit un affichage graphique d'une échelle non linéaire pour avoir une apparence visuelle qui imite une jauge à tambour mécanique. L'échelle non linéaire peut servir à afficher les paramètres de vol d'un aéronef, tels que la vitesse anémométrique, l'altitude, le cap, ainsi que d'autres paramètres de vol pouvant être présentés sur une échelle non linéaire. Un exemple d'indicateur d'altitude présente des graduations majeures tous les 100 mètres et mineures tous les 20 mètres.

Les documents US 3 915 052 A1, US 4 146 953 A et WO 2019/155245 A1 sont aussi connus.

Le document FR2770904 A1 décrit un indicateur d'altitude et de hauteur par rapport au sol pour aéronef avec une échelle linéaire verticale divisée en deux parties : une première partie transparente qui représente l'affichage d'un altimètre barométrique et une deuxième partie qui représente l'affichage d'une radio sonde, figuré par un ruban présentant la hauteur par rapport au sol et défilant devant un index fixe, la résolution de cet affichage étant plus grande à partir d'un certain seuil de rapprochement du sol.

La présente invention a alors pour objet de proposer un indicateur de hauteur innovant tendant à faciliter le travail d'un pilote.

La présente divulgation vise ainsi un indicateur de hauteur pour aéronef, ledit indicateur de hauteur étant muni d'un contrôleur pilotant un afficheur, ledit contrôleur et ledit afficheur étant configurés pour afficher une échelle de hauteur et un pointeur. L'échelle de hauteur est mobile par rapport au pointeur selon un axe sur ledit afficheur, ladite échelle de hauteur étant une échelle linéaire par morceaux, ladite échelle linéaire par morceaux comprenant plusieurs tronçons gradués munis de graduations, chaque tronçon gradué présentant sa propre échelle linéaire, chaque tronçon gradué ayant un facteur d'échelle différent d'un facteur d'échelle d'un autre tronçon gradué, à savoir différent d'au moins un autre facteur d'échelle d'un tronçon gradué voire de plusieurs voire de tous les autres facteurs d'échelle des autres tronçons gradués, chaque facteur d'échelle représentant le quotient entre une distance sur ledit tronçon gradué selon ledit axe et une hauteur réelle correspondante.

Le terme « hauteur » peut désigner une hauteur en tant que telle à savoir la distance séparant l'aéronef de la surface survolée ou une altitude.

Dès lors, l'échelle de hauteur présente une pluralité de tronçons gradués ayant chacun une échelle linéaire. Le facteur d'échelle d'un tronçon gradué est constant tout le long de ce tronçon gradué. Par contre, ce facteur d'échelle est différent pour deux tronçons gradués différents.

L'expression « hauteur courante » désigne une hauteur de l'aéronef à chaque instant.

Dès lors, le contrôleur et l'afficheur d'un objet sont configurés pour déplacer l'échelle de hauteur relativement au pointeur lorsque la hauteur courante de l'objet évolue. Le contrôleur et l'afficheur d'un objet sont configurés pour placer le pointeur en vis-à-vis d'une hauteur correspondant à la hauteur courante sur l'échelle de hauteur.

Par suite, pour une même vitesse verticale de l'aéronef, l'échelle de hauteur défile sur l'afficheur à une vitesse de défilement qui varie en fonction du tronçon gradué affiché.

La différence de facteur d'échelle entre deux tronçons gradués peut être configurée afin d'être suffisamment élevée pour créer un delta de vitesse de défilement des tronçons concernés afin d'alerter un pilote. Un coefficient multiplicateur entre ces facteurs d'échelle compris entre 2 et 5 est par exemple intéressant pour que la différence de mouvement soit détectée à l'œil par le pilote.

Dans le cas d'une phase de montée, le pilote est prévenu que l'aéronef s'éloigne de plus en plus du sol. Eventuellement, le pilote peut en déduire que l'aéronef passe certains paliers, chaque palier étant associé à la frontière entre deux tronçons gradués, par exemple dans le cas d'une procédure de décollage automatique suivant une trajectoire prédéterminée.

Dans le cas d'une phase de descente, ces sauts de défilement alertent le pilote par à-coups de la proximité de plus en plus grande du sol. Le pilote est ainsi alerté qu'il peut être judicieux de diminuer la vitesse verticale de l'aéronef pour atterrir dans de bonnes conditions.

Chaque tronçon gradué peut être dédié et optimisé pour une phase opérationnelle précise. Par exemple, des tronçons gradués peuvent être configurés pour avoir des vitesses de défilement optimisées pour des phases de vol transitoires de montée/descente ( facteur d'échelle pour un défilement rapide) et des tronçons gradués parcourus pendant un temps plus long ( facteur d'échelle pour un défilement lent pour une phase de vol en palier ou en vol stationnaire, etc.)

Ainsi, un pilote peut identifier facilement le passage d'un intervalle de hauteurs à un autre intervalle de hauteurs, simplement en notant que la vitesse de défilement de l'échelle évolue. Sans même regarder les éventuels symboles numériques, le pilote peut évaluer dans quel tronçon de hauteurs l'aéronef se trouve.

En outre, le défilement des tronçons gradués par rapport au pointeur est aussi un indicateur de la vitesse verticale de l'aéronef. La forme particulière des tronçons gradués permet non seulement de fournir une indication de hauteur de l'aéronef mais donne une indication visuelle de la vitesse verticale de l'aéronef au pilote.

La vitesse de défilement peut augmenter lors du changement de tronçons gradués en vis-à-vis du pointeur en se rapprochant de la surface survolée. Ainsi, le facteur d'échelle des tronçons gradués peut être établi pour inciter le pilote à réduire la vitesse verticale au fur et à mesure que l'aéronef se rapproche du sol.

L'indicateur de hauteur peut de plus comprendre une ou plusieurs des caractéristiques qui suivent, prises seules ou en combinaison.

Selon une possibilité, ladite échelle de hauteur peut être mobile en translation sur ledit afficheur, seule une partie de ladite échelle de hauteur comprenant une hauteur courante étant affichée à chaque instant sur l'afficheur.

Seule une partie de l'échelle complète est affichée sur l'afficheur. L'échelle de hauteur est par exemple affichée dans une première zone de l'afficheur. Selon un exemple, cette première zone est inscrite dans une fenêtre d'affichage rectangulaire aux dimensions prédéfinies.

L'échelle de hauteur peut être mise en mouvement de translation selon un axe vertical ou horizontal. A l'inverse, le pointeur est immobile.

Selon une possibilité compatible avec la précédente, le pointeur peut avoir une forme de Y. Le pointeur a alors une branche commune prolongée par deux branches inclinées. La branche commune est pointée vers l'échelle de hauteur, le contrôleur positionnant l'échelle de hauteur en vis-à-vis du pointeur pour mettre la partie de l'échelle de hauteur correspondant à la hauteur courante en vis-à-vis de la branche commune.

Selon une possibilité compatible avec les précédentes, lesdits plusieurs tronçons gradués peuvent comprendre un tronçon à basses hauteurs présentant un premier facteur d'échelle, le tronçon à basses hauteurs allant d'une hauteur de référence à une première hauteur supérieure à la hauteur de référence, lesdits plusieurs tronçons gradués comprenant un tronçon à hauteurs intermédiaires présentant un deuxième facteur d'échelle, le deuxième facteur d'échelle étant inférieur au premier facteur d'échelle, le tronçon à hauteurs intermédiaires allant de la première hauteur à une deuxième hauteur supérieure à la première hauteur.

La hauteur de référence peut être une hauteur nulle, notamment en présence d'une hauteur en tant que telle et non pas d'une altitude.

Cette caractéristique permet d'avoir l'information de hauteur la plus précise lorsque l'aéronef est proche de la surface survolée.

Le tronçon à basses hauteurs présente une sensibilité élevée et tend à défiler par rapport au pointeur plus vite que les autres tronçons gradués pour une même vitesse verticale de l'aéronef, ce qui incite naturellement le pilote à ralentir la descente de l'aéronef proche du sol.

En outre, l'échelle de hauteur est ainsi la plus dilatée au niveau du tronçon à basses hauteurs, à savoir dans une plage de hauteurs pour laquelle un senseur de hauteur peut être très précis. Par suite, l'indicateur de hauteur peut être plus précis dans un tronçon pour lequel le senseur de hauteur est aussi plus précis.

Au-delà du tronçon à basses hauteurs, l'échelle de hauteur peut être moins précise car d'une part le senseur de hauteur est moins précis et, d'autre part, la précision requise par le pilote pour assurer la sécurité du vol est de fait plus faible.

Eventuellement, un intervalle bas entre deux graduations successives du tronçon à basses hauteurs peut représenter une hauteur réelle basse, et un intervalle intermédiaire entre deux graduations successives du tronçon à hauteurs intermédiaires représente une hauteur réelle intermédiaire qui est supérieure à la hauteur réelle basse.

Chaque tronçon gradué peut se distinguer par un jeu de graduations qui lui est propre notamment au regard de l'intervalle séparant deux graduations successives de ce tronçon.

Ainsi, un pilote peut facilement identifier le tronçon gradué affiché et dès lors dans quel intervalle de hauteurs se trouve l'aéronef.

Selon une possibilité compatible avec les précédentes, un voire chaque tronçon gradué peut comporter des graduations de deux types à savoir des jalons munis chacun d'un segment de petite longueur et des jalons ayant chacun un segment de grande longueur.

Par exemple, le tronçon à basses hauteurs peut comporter des jalons majeurs et mineurs, le tronçon à hauteurs intermédiaires présentant des jalons courts et longs, les jalons courts ayant une forme différente des jalons mineurs.

Les jalons mineurs peuvent avoir une longueur plus courte que les jalons courts pour bien différencier les tronçons gradués visuellement.

Selon une possibilité compatible avec les précédentes, lesdits plusieurs tronçons gradués peuvent comprendre un tronçon à grandes hauteurs présentant un troisième facteur d'échelle, le tronçon à grandes hauteurs allant de la deuxième hauteur à une troisième hauteur, le troisième facteur d'échelle étant inférieur au deuxième facteur d'échelle, la deuxième hauteur étant inférieure à la troisième hauteur.

Le coefficient multiplicateur entre le troisième facteur d'échelle et le deuxième facteur d'échelle peut être supérieur au coefficient multiplicateur entre le deuxième facteur d'échelle et le premier facteur d'échelle. Par exemple, le rapport entre le troisième facteur d'échelle et le deuxième facteur d'échelle peut être de l'ordre de 4 pour alerter le pilote d'un changement de mode opérationnel (passage d'une phase de croisière à une phase de descente ou d'une phase de montée à une phase de croisière). Par contre, le coefficient multiplicateur entre le deuxième facteur d'échelle et le premier facteur d'échelle peut être plus faible et par exemple égal à 2, éventuellement pour alerter le pilote du besoin de ralentir dans une même phase opérationnel de descente.

Le tronçon à grandes hauteurs représente un tronçon de plus faible précision. La vitesse de défilement de ce tronçon à grandes hauteurs peut être plus lente que pour le tronçon à basses hauteurs et le tronçon à hauteurs intermédiaires, pour une même vitesse verticale de l'aéronef, afin d'épurer l'échelle de hauteur et l'adapter également à une éventuelle perte de précision d'un senseur de hauteur.

Selon une possibilité compatible avec les précédentes, un intervalle intermédiaire entre deux graduations successives du tronçon à hauteurs intermédiaires représentant une hauteur réelle intermédiaire, un intervalle haut entre deux graduations successives du tronçon à grandes hauteurs peut représenter une hauteur réelle haute qui est supérieure à la hauteur réelle intermédiaire.

Plus l'intervalle séparant deux graduations successives représente une hauteur importante, plus l'aéronef se trouve à une hauteur courante élevée.

Par contre, les graduations du tronçon à hauteurs intermédiaires et du tronçon à grandes hauteurs peuvent être de même forme. Ainsi, seules les graduations du tronçon à basses hauteurs ont éventuellement une forme différente pour signaler facilement au pilote que l'aéronef se trouve à une hauteur courante faible.

Selon une possibilité compatible avec les précédentes, ladite échelle de hauteur peut comprendre un tronçon non gradué au-delà de ladite troisième hauteur.

Dans un domaine de vol où la précision de hauteur requise par le pilote n'est plus aussi importante, ledit afficheur peut ne plus afficher un tronçon gradué.

Selon une possibilité compatible avec les précédentes, ledit contrôleur et ledit afficheur sont configurés pour afficher un nombre porteur d'une hauteur courante en vis-à-vis du pointeur au moins tant que ladite hauteur courante de l'aéronef est inférieure à un seuil prédéterminé.

La valeur de la hauteur courante est affichée en vis-à-vis du pointeur soit tout le temps soit tant que l'aéronef se trouve en dessous d'une hauteur prédéterminée.

Selon une possibilité compatible avec les précédentes, le contrôleur et l'afficheur peuvent être configurés pour afficher en vis-à-vis de deux graduations situées de part et d'autre du pointeur, les hauteurs correspondantes à ces deux graduations, éventuellement avec un hystérésis pour les faire apparaître/disparaitre progressivement.

Par exemple, l'indicateur de hauteurs affiche les valeurs de hauteurs correspondant aux deux graduations de grandes dimensions situées de part et d'autre de la hauteur courante, ou aux deux graduations encadrant directement le pointeur.

Selon une possibilité compatible avec les précédentes, le contrôleur et l'afficheur peuvent être configurés pour positionner au moins un symbole en vis-à-vis de l'échelle de hauteur, ledit au moins un symbole étant solidaire de l'échelle de hauteur, ledit au moins un symbole comprenant au moins un des symboles suivants : un symbole de hauteur de décision d'atterrissage représentant une hauteur seuil de décision d'atterrissage, un symbole de hauteur de décision de mission représentant un plancher de hauteur de mission, un symbole de pilotage automatique représentant une hauteur de consigne de pilotage automatique.

Une telle hauteur de consigne de pilotage automatique peut être une hauteur paramétrée à atteindre avec l'aéronef durant l'application d'un mode de pilotage automatique de tenue de vol stationnaire ou encore une hauteur paramétrée à atteindre avec l'aéronef durant l'application d'un mode de pilotage automatique de vol en palier.

Eventuellement, ledit symbole de hauteur de décision d'atterrissage peut varier en fonction d'une hauteur courante, ledit symbole de hauteur de décision d'atterrissage ayant une première forme lorsque la hauteur courante est supérieure à la hauteur seuil de décision d'atterrissage, ledit symbole de hauteur de décision d'atterrissage ayant une deuxième forme lorsque la hauteur courante est inférieure ou égale à la hauteur seuil de décision d'atterrissage.

Selon une possibilité compatible avec les précédentes, le contrôleur et l'afficheur peuvent être configurés pour positionner dans une deuxième zone d'affichage dudit afficheur distincte d'une première zone d'affichage affichant ladite échelle de hauteur : une première marque lorsque la hauteur courante est inférieure au plancher de hauteur de mission plus une deuxième marque lorsque la hauteur courante est inférieure à la hauteur seuil de décision d'atterrissage.

La présente divulgation vise aussi un aéronef comprenant au moins un indicateur de hauteur selon l'invention.

L'aéronef peut comprendre au moins un senseur de hauteur relié à l'indicateur de hauteur.

L'aéronef peut comprendre éventuellement plusieurs senseurs de hauteurs différents.

L'invention et ses avantages apparaîtront avec plus de détails dans le cadre de la description qui suit avec des exemples donnés à titre illustratif en référence aux figures annexées qui représentent :
la Figure 1, un schéma illustrant un indicateur de hauteurs selon l'invention agencé au sein d'un aéronef,
la Figure 2, un schéma illustrant l'échelle de hauteur selon l'invention,
la Figure 3, un schéma illustrant l'affichage d'une partie de l'échelle de hauteur contenant un tronçon à basses hauteurs,
la Figure 4, un schéma illustrant l'affichage d'une partie de l'échelle de hauteur contenant un tronçon à hauteurs intermédiaires,
la Figure 5, un schéma illustrant l'affichage d'une partie de l'échelle de hauteur contenant un tronçon à grandes hauteurs,
la Figure 6, un schéma illustrant l'affichage d'une partie de l'échelle de hauteur contenant un tronçon à grandes hauteurs à proximité de son sommet,
la Figure 7, un schéma illustrant l'affichage d'une partie de l'échelle de hauteur contenant un tronçon non gradué,
la Figure 8, un schéma illustrant l'affichage progressif de la valeur d'une hauteur associée à une graduation,
la Figure 9, un schéma illustrant l'affichage d'une marque sur l'afficheur concomitamment à l'affichage de symboles de l'échelle de hauteur sur l'afficheur, et
la Figure 10, un schéma illustrant l'affichage d'une marque sur l'afficheur concomitamment à l'affichage de symboles de l'échelle de hauteur sur l'afficheur.

Les éléments présents dans plusieurs figures distinctes sont affectés d'une seule et même référence.

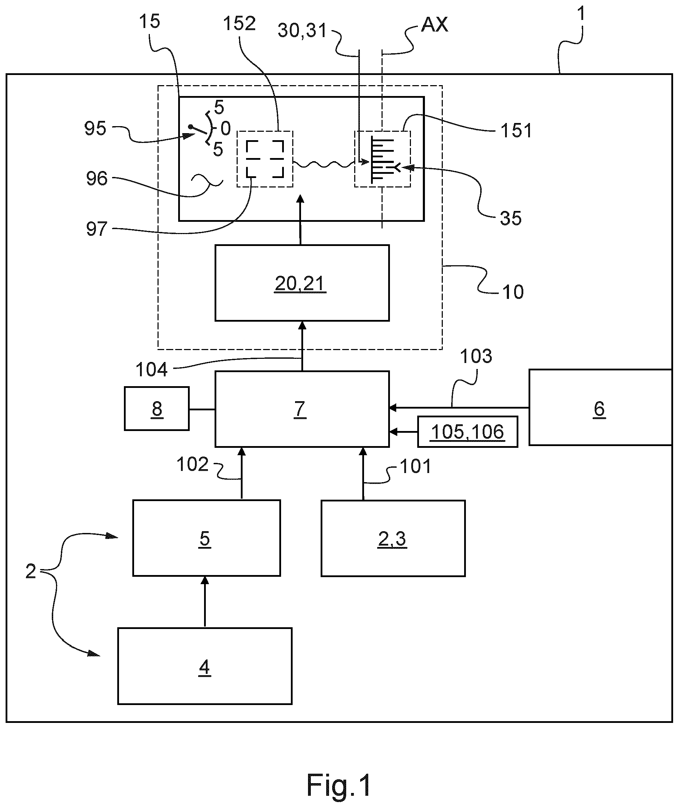

La figure 1 présente un indicateur de hauteur 10 selon l'invention. Cet indicateur de hauteur 10 peut être agencé au sein d'un système porteur 1, tel qu'un véhicule et notamment un aéronef. Les éléments qui ne sont pas utiles au fonctionnement de l'indicateur de hauteur 10 ne sont pas représentés pour ne pas alourdir inutilement les figures. L'indicateur de hauteur 10 est configuré pour afficher des informations en fonction d'au moins un signal d'affichage 104 porteur au moins d'une hauteur courante HCUR.

Le système porteur 1 peut par ailleurs comporter au moins un senseur de hauteur 2. Un senseur de hauteur 2 fournit une hauteur à savoir une distance séparant ce senseur de hauteur 2 de l'élément survolé ou une altitude. Autrement dit, un senseur de hauteur 2 peut fournir une donnée relative à la position verticale du senseur par rapport à l'élément survolé.

L'expression « senseur de hauteur » est à interpréter au sens large en désignant un dispositif générant un signal numérique ou analogique image d'une hauteur ou d'une altitude, par exemple un signal électrique présentant une tension électrique variant en fonction de la hauteur. Un senseur de hauteur peut ainsi comprendre au moins un organe de mesure qui génère un signal de mesure, voire au moins un organe de traitement qui génère un signal porteur de la hauteur mesurée à partir du signal de mesure.

Par exemple, un senseur de hauteur 2 peut comprendre une radiosonde 3 émettant un signal de radiosonde 101 porteur d'une hauteur courante HCUR mesurée.

Un autre senseur de hauteur 2 peut comprendre un modèle de terrain 4 et un dispositif de localisation 5. Par exemple, le dispositif de localisation 5 comporte un récepteur d'un système de positionnement par satellites. Un calculateur, du récepteur ou autre, peut alors compiler les données relevées par le dispositif de localisation 5 et le modèle de terrain 4 pour générer un signal de mesure de hauteur 102.

Le terme « calculateur » désigne un dispositif ayant une ou plusieurs unités de traitement, chaque unité de traitement pouvant comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Le système porteur 1 peut par ailleurs comporter un pilote automatique 6 générant une ou des consignes de pilotage automatique 103. Par exemple, le pilote automatique 6 peut générer une hauteur de consigne à respecter via une interface pilote-machine. En particulier, le pilote automatique 6 peut piloter un véhicule pour le maintenir en vol stationnaire à une hauteur de vol stationnaire lors de l'application d'un mode de pilotage automatique de tenue de vol stationnaire, ou encore à une hauteur de vol en palier lors d'une phase de vol en palier durant l'application d'un mode de pilotage automatique de vol en palier.

Le système porteur 1 peut par ailleurs comporter une ou plusieurs interfaces homme-machine 105, 106.

Eventuellement, le système porteur 1 peut comprendre un calculateur de transformation 7 assurant la transformation de données physiques en un signal d'affichage 104, par exemple numérique, adapté pour l'affichage de symboles sur l'indicateur de hauteur 10. Le calculateur de transformation 7 peut être relié à un ou des senseurs de hauteurs 2, à un pilote automatique 6 voire à un senseur de vitesse verticale 8, voire à la ou les interfaces homme-machine 105, 106. Le calculateur de transformation 7 peut être configuré pour déterminer une hauteur courante HCUR du système porteur 1 voire de l'indicateur de hauteur 10 en fonction des données reçues du ou des senseurs de hauteur 2. Par exemple, le calculateur de transformation 7 fusionne les données de hauteur provenant de plusieurs senseurs de hauteur 2. Selon un autre exemple, le calculateur de transformation 7 exploite les données transmises par la radiosonde 3 en dessous d'une hauteur particulière mémorisée, et les données du senseur de hauteur 2 à modèle de terrain 4 et dispositif de localisation 5 à partir et au dessus de cette hauteur particulière.

Indépendamment de la manière de générer un signal d'affichage 104 analogique ou numérique, un indicateur de hauteur 10 est muni d'un contrôleur 20 pilotant un afficheur 15.

L'afficheur 15 peut prendre la forme d'un écran, d'une visière de casque, d'une lunette, d'un collimateur tête haute...

Le contrôleur 20 peut comprendre un calculateur générateur de symboles 21 permettant de matérialiser sur l'afficheur 15, à partir des informations fournies par le ou les signaux d'affichage 104, des symboles porteurs de données physiques réelles.

Le calculateur générateur de symboles 21 peut être un calculateur dédié ou partagé avec d'autres systèmes. Eventuellement, le calculateur générateur de symboles 21 et le calculateur de transformation 7 forment un seul et même calculateur.

La calculateur générateur de symboles 21 peut être intégré ou distant de l'afficheur 15.

Par exemple, le calculateur générateur de symboles 21 peut être un calculateur intégré à l'afficheur 15 pour former un afficheur éventuellement multifonctions. Selon un autre exemple, le calculateur générateur de symboles 21 peut être un calculateur pilotant l'affichage d'informations sur une visière de casque ou un autre type d'afficheur.

Les divers exemples donnés précédemment sont donnés à titre illustratif.

Indépendamment de la manière de générer un signal d'affichage 104 analogique ou numérique ainsi que de la nature et la forme du contrôleur 20 et de l'afficheur 15, ce contrôleur 20 et cet afficheur 15 sont configurés pour au moins afficher une échelle de hauteur 30 et un pointeur 35. L'échelle de hauteur 30 peut être graduée en mètre, en pieds, voire l'unité de l'échelle de hauteur 30 peut être paramétrable avec une interface usuelle de l'aéronef.

Par exemple, l'afficheur 15 est configuré pour afficher l'échelle de hauteur 30 et le pointeur 35 dans une première zone d'affichage 151 de cet afficheur 15. L'afficheur 15 peut être configuré pour afficher d'autres informations au moins dans une deuxième zone d'affichage 152 de cet afficheur 15, telles qu'un ou plusieurs traits 96 représentant le terrain, un symbole d'attitude 97 de l'aéronef, un variomètre 95...

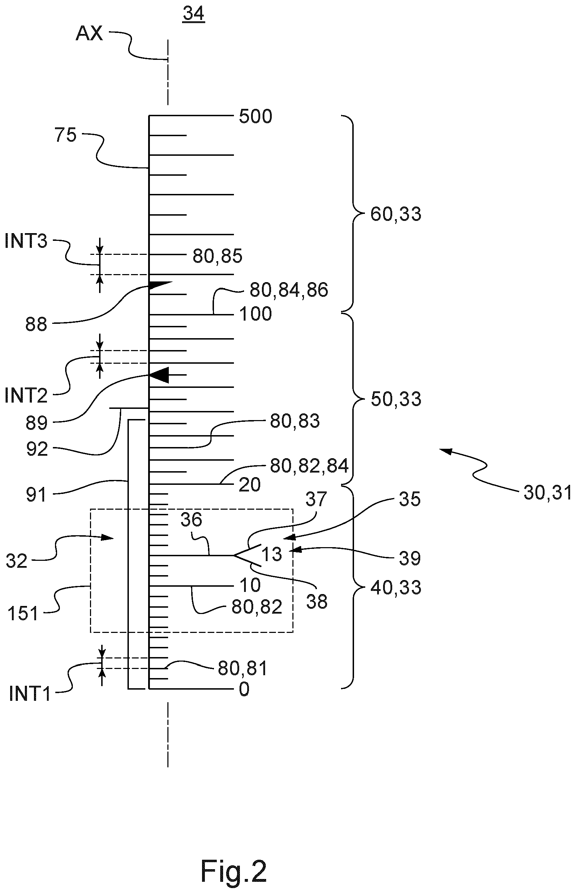

La figure 2 illustre une telle échelle de hauteur 30 et un tel pointeur 35.

L'échelle de hauteur 30 est rendue mobile par rapport au pointeur 35 selon un axe AX par l'afficheur 15 et le contrôleur 20, à savoir l'échelle de hauteur 30 et/ou le pointeur 35 peuvent être mobiles sur l'afficheur 15. Par exemple, le pointeur 35 est immobile sur l'afficheur 15 alors que le contrôleur 20 et l'afficheur 15 sont configurés pour déplacer l'échelle de hauteur 30 selon cet axe AX afin que le pointeur 35 pointe la hauteur courante HUCR sur l'échelle de hauteur 30. Dans tous les cas, le contrôleur 20 et l'afficheur 15 sont configurés pour que le pointeur 35 pointe alors un point de l'échelle de hauteur 30 porteur de la hauteur courante HCUR. Cet axe AX peut être un axe vertical aux yeux d'un pilote selon l'exemple illustré, ou encore un axe horizontal par exemple.

Selon l'exemple illustré, le pointeur 35 peut avoir une forme en Y. Cette forme en Y peut comprendre une branche commune 36 prolongée par deux branches inclinées 37, 38. La branche commune 36 est alors dirigée vers l'échelle de hauteur 30. Eventuellement, le contrôleur 20 et l'afficheur 15 sont configurés pour afficher un nombre 39 porteur de la hauteur courante HCUR en vis-à-vis du pointeur 35, soit en permanence soit uniquement lorsque la hauteur courante HCUR est inférieure à un seuil prédéterminé mémorisé. Par exemple, le nombre 39 est affiché entre les branches inclinées 37, 38.

Eventuellement, la première zone d'affichage 151 est configurée pour ne pouvoir afficher qu'une partie 32 de l'échelle de hauteur 30. Dès lors, à chaque instant, l'afficheur 15 est configuré pour n'afficher qu'une partie 32 de l'échelle de hauteur contenant la hauteur courante HCUR pointée par le pointeur 35.

Par ailleurs, l'échelle de hauteur 30 comprend plusieurs tronçons gradués 33 munis de graduations 80. La référence 33 est utilisée pour désigner n'importe quel tronçon gradué, les références 40, 50, 60 étant utilisées par la suite pour désigner des tronçons gradués 33 particuliers.

Ainsi, l'échelle de hauteur 30 peut comporter un segment principal 75 porteur des graduations 80.

La référence 80 désigne n'importe quelle graduation. Les références 81-86 désignent des types particuliers de graduations explicités par la suite.

Chaque graduation 80 peut prendre la forme d'un segment qui s'étend le cas échéant à partir du segment principal 75, par exemple perpendiculairement au segment principal 75. De même, la branche commune 36 éventuelle du pointeur 35 peut comprendre un segment qui s'étend le long d'un axe perpendiculaire au segment principal 75.

Chaque tronçon gradué 33 comprend alors un secteur du segment principal 75 éventuel et des graduations 80. Deux tronçons gradués 33 successifs peuvent avoir une graduation commune, une telle graduation commune étant dès lors à l'interface entre ces deux tronçons gradués.

En outre, l'échelle de hauteur 30 est une échelle linéaire par morceaux 31. Par suite, chaque tronçon gradué 33 présente sa propre échelle linéaire, qui diffère de l'échelle linéaire d'au moins un voire de chaque autre tronçon gradué 33.

Par conséquent, chaque tronçon gradué 33 a un facteur d'échelle différent d'un facteur d'échelle de chaque autre tronçon gradué 33. L'expression « facteur d'échelle » représente pour un tronçon gradué 33 le quotient entre une distance sur le tronçon gradué 33 selon ledit axe AX et une hauteur réelle associée. Par exemple, le facteur d'échelle correspond au quotient de la distance sur le tronçon gradué 33 concerné et une hauteur réelle de un pied, à savoir de 0,31 mètre par exemple.

Par ailleurs, l'échelle de hauteur 30 peut comprendre un tronçon gradué 33 de type « tronçon à basses hauteurs 40 ».

Le tronçon à basses hauteurs 40 couvre un segment de hauteurs allant d'une hauteur de référence H0, par exemple égale à zéro à une première hauteur H1, par exemple de l'ordre de 20 pieds soit environ 6.1 mètres. Le tronçon à basses hauteurs 40 présente un premier facteur d'échelle. Par exemple, une hauteur réelle de 1 pied équivaut à une distance de 8.5 millimètres sur l'afficheur 15 ce qui induit un premier facteur d'échelle égal sensiblement à 8.5 millimètres divisées par un pied.

Le tronçon à basses hauteurs 40 comporte de multiples graduations 80. Un intervalle bas INT1 entre deux graduations 80 successives du tronçon à basses hauteurs 40 représente une hauteur réelle basse, par exemple d'une valeur d'un pied, soit environ 0.31 mètre.

Par exemple, le tronçon à basses hauteurs 40 comporte des graduations 80, notamment des graduations de grandes et petites dimensions à savoir respectivement des jalons majeurs 82 et des jalons mineurs 81. Chaque jalon majeur 82 présente un segment ayant une longueur supérieure à une longueur de segments des jalons mineurs 81. Par exemple, le tronçon à basses hauteurs 40 comporte un jalon majeur 82 tous les 10 pieds, soit par exemple aux niveaux de la hauteur de référence H0 ainsi que d'une hauteur de 10 pieds et une hauteur de 20 pieds selon l'illustration, et un jalon mineur 81 tous les pieds entre deux jalons majeurs 82.

Par ailleurs, l'échelle de hauteur 30 peut comprendre un tronçon gradué 33 de type « tronçon à hauteurs intermédiaires 50 » faisant suite au tronçon à basses hauteurs 40.

Le tronçon à hauteurs intermédiaires 50 couvre un segment de hauteurs allant de la première hauteur H1 à une deuxième hauteur H2, par exemple de l'ordre de 100 pieds soit environ 30.5 mètres. Le tronçon à hauteurs intermédiaires 50 présente un deuxième facteur d'échelle. Le deuxième facteur d'échelle est par exemple inférieur au premier facteur d'échelle, le premier facteur d'échelle étant par exemple de l'ordre du double du deuxième facteur d'échelle.

Dès lors, le tronçon à basses hauteurs 40 s'avère plus dilaté que le tronçon à hauteurs intermédiaires 50 pour apporter plus de précision aux basses hauteurs. Le tronçon à hauteurs intermédiaires 50 est moins précis à la fois en raison de la précision de la ou des senseurs de hauteur 2 dans l'intervalle de hauteurs concerné et dans la mesure où la sécurité du vol ne nécessite pas une précision très importante.

Par exemple, une hauteur réelle de 1 pied équivaut à une distance de 3.5 millimètres sur l'afficheur 15 dans le tronçon à hauteurs intermédiaires 50 ce qui induit un deuxième facteur d'échelle égal sensiblement à 3.5 millimètres divisés par un pied.

Le tronçon à hauteurs intermédiaires 50 comporte de multiples graduations 80. Un intervalle intermédiaire INT2 entre deux graduations 80 successives du tronçon à hauteurs intermédiaires 50 représente une hauteur réelle intermédiaire. La hauteur réelle intermédiaire est supérieure à la hauteur réelle basse, par exemple de l'ordre de cinq fois la hauteur réelle basse et donc selon l'exemple d'une valeur de cinq pieds, soit environ 1.5 mètres.

Par exemple, le tronçon à hauteurs intermédiaires 50 comporte des graduations 80, notamment des graduations de grandes et petites dimensions à savoir respectivement de type jalons longs 84 et jalons courts 83. Chaque jalon long 84 a une longueur supérieure à une longueur des jalons courts 83, et par exemple égale aux jalons majeurs 82. Les jalons courts 83 peuvent avoir à l'inverse une forme différente des jalons mineurs 81.

Par exemple, le tronçon à hauteurs intermédiaires 50 comporte un jalon long 84 tous les 10 pieds, et un jalon court 83 tous les cinq pieds entre deux jalons longs 84.

Par ailleurs, l'échelle de hauteur 30 peut comprendre un tronçon gradué 33 de type « tronçon à grandes hauteurs 60 » faisant suite au tronçon à hauteurs intermédiaires 50.

Le tronçon à grandes hauteurs 60 couvre un intervalle de hauteurs allant de la deuxième hauteur H2 à une troisième hauteur H3, par exemple de l'ordre de 500 pieds soit environ 152.4 mètres. Le tronçon à grandes hauteurs 60 présente un troisième facteur d'échelle. Le troisième facteur d'échelle est par exemple inférieur au deuxième facteur d'échelle.

Dès lors, le tronçon à grandes hauteurs 60 s'avère moins dilaté que le tronçon à hauteurs intermédiaires 50 pour alléger l'affichage dans un intervalle de hauteurs plus éloignées du sol et de fait correspondant à des hauteurs moins dangereuses.

En outre, en raison des facteurs d'échelle, pour une même vitesse verticale, l'échelle de hauteur 30 se déplace à une vitesse qui croit en passant du tronçon à grandes hauteurs 60 au tronçon à hauteurs intermédiaires 50 puis au tronçon à basses hauteurs 40. En particulier, pour une même vitesse verticale d'un aéronef, l'échelle de hauteur 30 se déplace à une première vitesse lorsque la hauteur courante est dans le tronçon à grandes hauteurs 60, à une deuxième vitesse supérieure à la première vitesse lorsque la hauteur courante est dans le tronçon à hauteurs intermédiaires 50 et à une troisième vitesse supérieure à la deuxième vitesse lorsque la hauteur courante est dans le tronçon à basses hauteurs 40.

Par exemple, une hauteur réelle de 1 pied équivaut à une distance de 0.85 millimètre sur l'afficheur 15 dans le tronçon à grandes hauteurs 60, ce qui induit un troisième facteur d'échelle égal sensiblement à 0.85 millimètre divisé par un pied.

Le tronçon à grandes hauteurs 60 comporte de multiples graduations 80. Un intervalle haut INT3 entre deux graduations 80 successives du tronçon à grandes hauteurs 60 représente une hauteur réelle haute. La hauteur réelle haute est supérieure à la hauteur réelle intermédiaire, par exemple de l'ordre de dix fois la hauteur réelle intermédiaire et donc selon l'exemple d'une valeur de cinquante pieds, soit environ 15.4 mètres.

Par exemple, le tronçon à grandes hauteurs 60 comporte des graduations 80, notamment des graduations de grandes et petites dimensions à savoir respectivement de type grands jalons 86 et petits jalons 85. Chaque grand jalon 86 a une longueur supérieure à une longueur des petits jalons 85, et par exemple égale aux jalons majeurs 82 et longs 84. Les petits jalons 85 peuvent avoir une forme identique à celle des jalons courts 83.

Par exemple, le tronçon à grandes hauteurs 60 comporte un grand jalon 86 tous les 100 pieds, et un petit jalon 85 à mi-chemin entre deux grands jalons 86.

Par ailleurs, l'échelle de hauteur 30 peut comprendre un tronçon non gradué 34 faisant suite aux tronçons gradués 33 et en particulier au tronçon à grandes hauteurs 60 selon l'exemple.

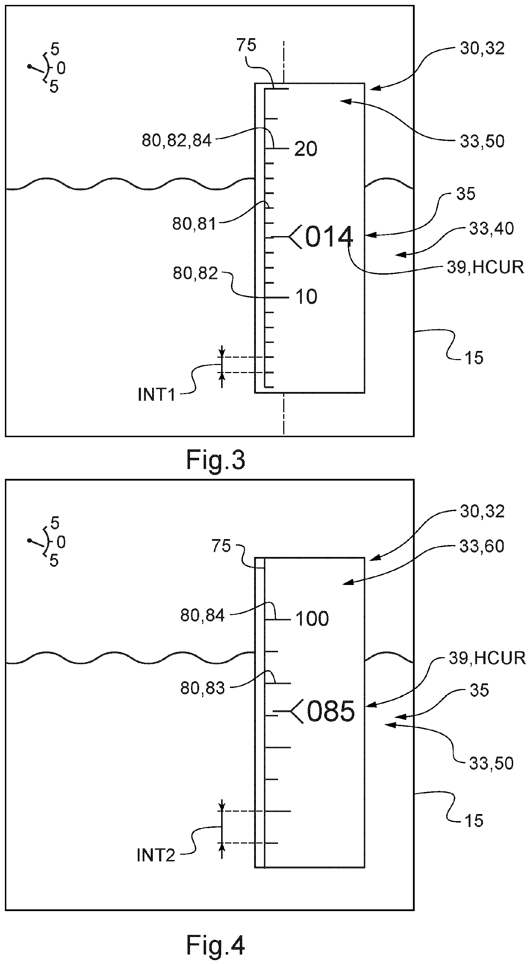

Dans ce contexte, la figure 3 illustre schématiquement un indicateur de hauteur 30 lorsque la hauteur courante HCUR se situe dans le tronçon à basses hauteurs 40.

La figure 4 illustre schématiquement un indicateur de hauteur 30 lorsque la hauteur courante HCUR se situe dans le tronçon à hauteurs intermédiaires 50.

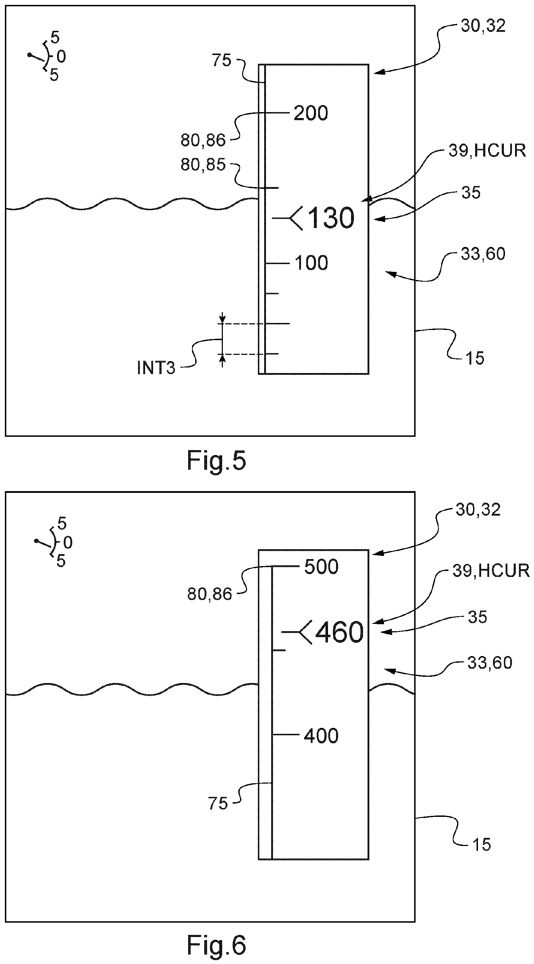

La figure 5 illustre schématiquement un indicateur de hauteur 30 lorsque la hauteur courante HCUR se situe dans le tronçon à grandes hauteurs 60.

La figure 6 illustre schématiquement un indicateur de hauteur 30 lorsque la hauteur courante HCUR se situe dans le tronçon à grandes hauteurs 60, mais à proximité d'un bout des tronçons gradués 33.

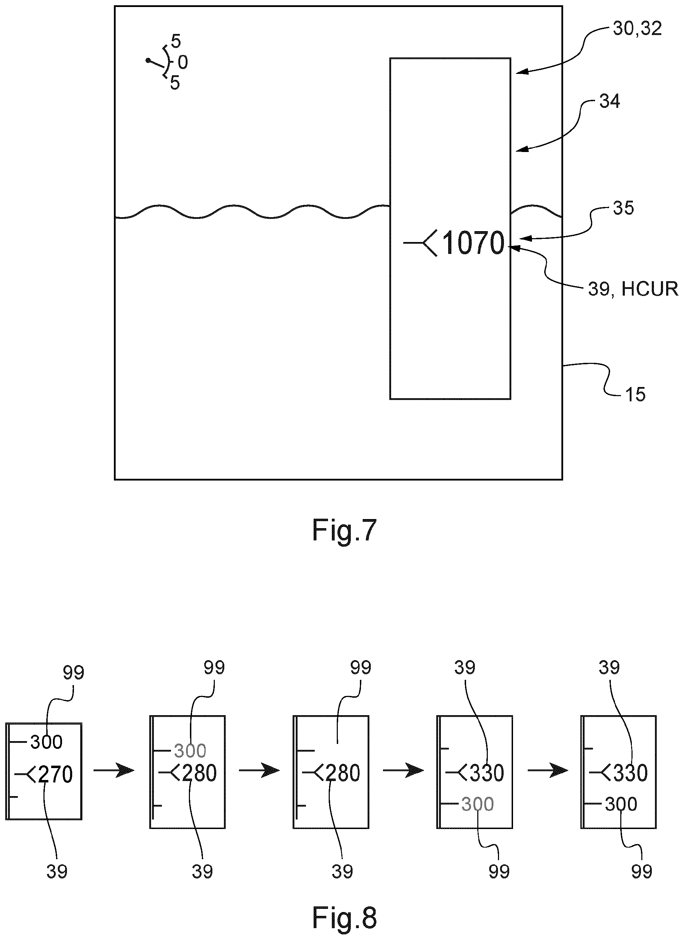

La figure 7 illustre schématiquement un indicateur de hauteur lorsque la hauteur courante HCUR se situe dans le tronçon non gradué 34.

Selon un autre aspect et en référence à la figure 8, le contrôleur 20 et l'afficheur 15 peuvent être configurés pour afficher des valeurs de hauteur en vis-à-vis de deux graduations 80 situées de part et d'autre du pointeur 35, et par exemple de deux graduations de grandes dimensions 82, 84, 86 ou deux graduations encadrant le pointeur.

La figure 8 illustre la possibilité de prévoir un affichage progressif de ces valeurs de hauteur disposées autour de la hauteur courante HCUR

La figure 8 illustre ainsi une portion de l'échelle de hauteur 30 affichée sur l'afficheur 15 à des instants successifs.

Par exemple, l'afficheur 15 modifie progressivement l'opacité des nombres porteurs des hauteurs affichées. Cette opacité peut évoluer entre une valeur de 1 impliquant le plein affichage de la hauteur concernée et une valeur nulle rendant invisible la hauteur concernée.

Selon une première variante, la valeur de l'opacité Op est fonction du temps au passage d'une limite du type Op = 1 - dt/T lors de la disparition du nombre et Op = dt/T lors de l'apparition du nombre, avec dt le temps écoulé et T le temps total avant la disparition/apparition.

Selon une deuxième variante, la valeur de l'opacité Op est fonction de la distance entre deux valeurs Y1, Y2 de hauteurs de l'échelle de hauteurs 30 selon une relation du type Op = 1- dy/(Y1 - Y2) lors de la disparition et Op = dy/(Y1-Y2) lors de l'apparition, avec dy la distance entre lesdites deux hauteurs sur l'afficheur 15.

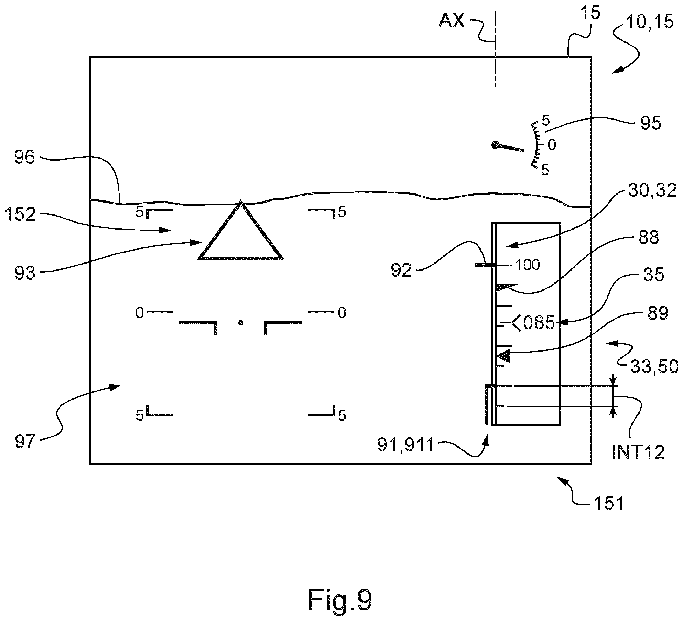

Selon un autre aspect et en référence à la figure 9, le contrôleur 20 et l'afficheur 15 peuvent être configurés pour positionner un ou plusieurs symboles en vis-à-vis de l'échelle de hauteur 30, chaque symbole étant solidaire de l'échelle de hauteur 30. Ce symbole peut être choisi dans une liste comprenant au moins un des symboles suivants : un symbole de hauteur de décision d'atterrissage 91 représentant une hauteur seuil de décision d'atterrissage mémorisée ou paramétrable avec une interface homme-machine 105, un symbole de hauteur de décision de mission 92 représentant un plancher de hauteur de mission mémorisé ou paramétrable avec une interface homme-machine 106, un symbole de pilotage automatique 88, 89 représentant une hauteur de consigne de pilotage automatique. Un tel symbole de pilotage automatique peut comprendre un symbole 88 positionné à une hauteur de vol stationnaire ou un symbole 89 positionné à une hauteur de vol en palier.

La figure 9 est donnée à titre illustratif, les divers symboles étant positionnés de manière arbitraire.

Eventuellement, l'afficheur 15 est configuré pour faire varier le symbole de hauteur de décision d'atterrissage 91 en fonction de la hauteur courante HCUR.

Ainsi, le symbole de hauteur de décision d'atterrissage 91 peut avoir une première forme 911 lorsque la hauteur courante HCUR est supérieure à la hauteur seuil de décision d'atterrissage, en particulier une hauteur seuil de décision d'atterrissage de 70 pieds selon l'exemple illustré sur la figure 9.

En parallèle, le contrôleur 20 et ledit afficheur 15 sont éventuellement configurés pour positionner dans la deuxième zone d'affichage 152 une première marque 93, tel qu'un triangle par exemple, lorsque la hauteur courante est inférieure au plancher de hauteur de mission.

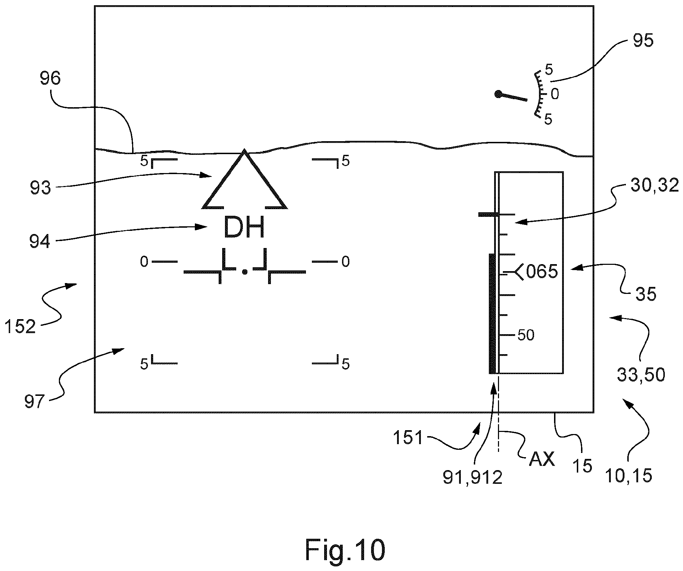

En référence à la figure 10, lorsque la hauteur courante devient inférieure ou égale à la hauteur seuil de décision d'atterrissage, l'afficheur 15 est configuré pour conférer une deuxième forme 912 au symbole de hauteur de décision 91.

En parallèle, le contrôleur 20 et l'afficheur 15 sont configurés pour positionner dans la deuxième zone d'affichage 152 une deuxième marque 94, en plus de la première marque 93.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Indicateur de hauteur (10) pour aéronef (1), ledit indicateur de hauteur (10) étant muni d'un contrôleur (20) pilotant un afficheur (15), ledit contrôleur (20) et ledit afficheur (15) étant configurés pour afficher une échelle de hauteur (30) et un pointeur (35),
ladite échelle de hauteur (30) étant mobile par rapport au pointeur (35) selon un axe (AX) sur ledit afficheur (15), ladite échelle de hauteur (30) étant une échelle linéaire par morceaux (31), ladite échelle linéaire par morceaux (31) comprenant plusieurs tronçons gradués (33) munis de graduations (80), chaque tronçon gradué (33) présentant sa propre échelle linéaire, chaque tronçon gradué (33) ayant un facteur d'échelle différent d'un facteur d'échelle d'un autre tronçon gradué, chaque facteur d'échelle représentant le quotient entre une distance sur ledit tronçon gradué (33) selon ledit axe (AX) et une hauteur réelle correspondante,
**caractérisé en ce que**
lesdits plusieurs tronçons gradués (33) comprennent un tronçon à basses hauteurs (40) présentant un premier facteur d'échelle, le tronçon à basses hauteurs (40) allant d'une hauteur de référence (H0) à une première hauteur (H1) supérieure à la hauteur de référence (H0), lesdits plusieurs tronçons gradués (33) comprenant un tronçon à hauteurs intermédiaires (50) présentant un deuxième facteur d'échelle, le deuxième facteur d'échelle étant inférieur au premier facteur d'échelle, le tronçon à hauteurs intermédiaires (50) allant de la première hauteur (H1) à une deuxième hauteur (H2) supérieure à la première hauteur (H1).

2. Indicateur de hauteur selon la revendication 1,
**caractérisé en ce que** ladite échelle de hauteur (30) est mobile en translation sur ledit afficheur (15), seule une partie (32) de ladite échelle de hauteur (30) comprenant une hauteur courante (HCUR) étant affichée à chaque instant sur l'afficheur (15).

3. Indicateur de hauteur selon l'une quelconque des revendications 1 à 2,
**caractérisé en ce qu'**un intervalle bas (INT1) entre deux graduations (81, 82) successives du tronçon à basses hauteurs (40) représente une hauteur réelle basse, un intervalle intermédiaire (INT2) entre deux graduations (83, 84) successives du tronçon à hauteurs intermédiaires (50) représente une hauteur réelle intermédiaire qui est supérieure à la hauteur réelle basse.

4. Indicateur de hauteur selon l'une quelconque des revendications 1 à 3,
**caractérisé en ce que** le tronçon à basses hauteurs (40) comporte des jalons majeurs (82) et mineurs (81) desdites graduations (80), le tronçon à hauteurs intermédiaires (50) présentant des jalons courts (83) et longs (84) desdites graduations (80), les jalons courts (83) ayant une forme différente des jalons mineurs (81).

5. Indicateur de hauteur selon l'une quelconque des revendications 1 à 4,
**caractérisé en ce que** lesdits plusieurs tronçons gradués (33) comprennent un tronçon à grandes hauteurs (60) présentant un troisième facteur d'échelle, le tronçon à grandes hauteurs (60) allant de la deuxième hauteur (H2) à une troisième hauteur (H3), le troisième facteur d'échelle étant inférieur au deuxième facteur d'échelle, la deuxième hauteur (H2) étant inférieure à la troisième hauteur (H3).

6. Indicateur de hauteur selon la revendication 5,
**caractérisé en ce qu'**un intervalle intermédiaire (INT2) entre deux graduations (80) successives du tronçon à hauteurs intermédiaires (50) représentant une hauteur réelle intermédiaire, un intervalle haut (INT3) entre deux graduations (80) successives du tronçon à grandes hauteurs (60) représente une hauteur réelle haute qui est supérieure à la hauteur réelle intermédiaire.

7. Indicateur de hauteur selon l'une quelconque des revendications 5 à 6,
**caractérisé en ce que** ladite échelle de hauteur (30) comprend un tronçon non gradué (34) au-delà de ladite troisième hauteur (H3).

8. Indicateur de hauteur selon l'une quelconque des revendications 1 à 7,
**caractérisé en ce que** ledit contrôleur (20) et ledit afficheur (15) sont configurés pour afficher un nombre (39) porteur d'une hauteur courante en vis-à-vis du pointeur (35) au moins tant que ladite hauteur courante de l'aéronef (1) est inférieure à un seuil prédéterminé.

9. Indicateur de hauteur selon l'une quelconque des revendications 1 à 8,
**caractérisé en ce que** ledit contrôleur (20) et ledit afficheur (15) sont configurés pour afficher en vis-à-vis de deux graduations (80) situées de part et d'autre du pointeur (35), les hauteurs correspondantes à ces deux graduations.

10. Indicateur de hauteur selon l'une quelconque des revendications 1 à 9,
**caractérisé en ce que** ledit contrôleur (20) et ledit afficheur (15) sont configurés pour positionner au moins un symbole en vis-à-vis de l'échelle de hauteur (30), ledit au moins un symbole étant solidaire de l'échelle de hauteur (30), ledit au moins un symbole comprenant au moins un des symboles suivants : un symbole de hauteur de décision d'atterrissage (91) représentant une hauteur seuil de décision d'atterrissage, un symbole de hauteur de décision de mission (92) représentant un plancher de hauteur de mission, un symbole de pilotage automatique (88, 89) représentant une hauteur de consigne de pilotage automatique.

11. Indicateur de hauteur selon la revendication 10,
**caractérisé en ce que** ledit au moins un symbole comprend un symbole de hauteur de décision d'atterrissage (91),ledit symbole de hauteur de décision d'atterrissage (91) varie en fonction d'une hauteur courante, ledit symbole de hauteur de décision d'atterrissage (91) ayant une première forme (911) lorsque la hauteur courante est supérieure à la hauteur seuil de décision d'atterrissage, ledit symbole de hauteur de décision d'atterrissage (91) ayant une deuxième forme (912) lorsque la hauteur courante est inférieure ou égale à la hauteur seuil de décision d'atterrissage.

12. Indicateur de hauteur selon l'une quelconque des revendications 10 à 11,
**caractérisé en ce que** ledit au moins un symbole comprend un symbole de hauteur de décision d'atterrissage (91) et un symbole de hauteur de décision de mission (92) représentant un plancher de hauteur de mission, ledit contrôleur (20) et ledit afficheur (15) sont configurés pour positionner dans une deuxième zone d'affichage (152) dudit afficheur (15) distincte d'une première zone d'affichage (151) affichant ladite échelle de hauteur (30): une première marque (93) lorsque la hauteur courante est inférieure au plancher de hauteur de mission plus une deuxième marque (94) lorsque la hauteur courante est inférieure à la hauteur seuil de décision d'atterrissage.

13. Aéronef (1) comprenant au moins un indicateur de hauteur (10) selon l'une quelconque des revendications 1 à 12.

14. Aéronef selon la revendication 13,
**caractérisé en ce que** ledit aéronef (1) comprend au moins un senseur de hauteur (2) relié audit indicateur de hauteur (10).

## Patentansprüche

1. Höhenanzeiger (10) für ein Luftfahrzeug (1), wobei der Höhenanzeiger (10) mit einer Steuerung (20) versehen ist, die eine Anzeige (15) steuert, wobei die Steuerung (20) und die Anzeige (15) konfiguriert sind, um eine Höhenskala (30) und einen Zeiger (35) anzuzeigen, wobei die Höhenskala (30) in Bezug auf den Zeiger (35) entlang einer Achse (AX) auf dem Display (15) beweglich ist, wobei die Höhenskala (30) eine stückweise lineare Skala (31) ist, wobei die stückweise lineare Skala (31) mehrere mit Teilungen (80) versehene Skalenabschnitte (33) umfasst, wobei jeder Skalenabschnitt (33) seinen eigenen linearen Maßstab aufweist, wobei jeder Skalenabschnitt (33) einen Maßstabsfaktor hat, der sich von einem Maßstabsfaktor eines anderen Skalenabschnitts unterscheidet, wobei jeder Maßstabsfaktor den Quotienten zwischen einer Entfernung auf dem Skalenabschnitt (33) gemäß der Achse (AX) und einer entsprechenden tatsächlichen Höhe darstellt,
**dadurch gekennzeichnet, dass** die mehreren Skalenabschnitte (33) einen Abschnitt geringer Höhe (40) mit einem ersten Maßstabsfaktor umfassen, wobei der Abschnitt geringer Höhe (40) von einer Bezugshöhe (H0) bis zu einer ersten Höhe (H1) reicht, die größer als die Bezugshöhe (H0) ist, und dass die mehreren Skalenabschnitte (33) einen Abschnitt mittlerer Höhe (50) mit einem zweiten Skalenfaktor umfassen, wobei der zweite Skalenfaktor kleiner als der erste Skalenfaktor ist, wobei der Abschnitt mittlerer Höhe (50) von der ersten Höhe (H1) zu einer zweiten Höhe (H2) reicht, die größer als die erste Höhe (H1) ist.

2. Höhenanzeiger nach Anspruch 1,
**dadurch gekennzeichnet, dass** die Höhenskala (30) auf der Anzeige (15) verschiebbar ist, und dass nur ein Teil (32) der Höhenskala (30), der eine aktuelle Höhe (HCUR) umfasst, zu jedem Zeitpunkt auf der Anzeige (15) angezeigt wird.

3. Höhenanzeige nach einem der Ansprüche 1 bis 2,
**dadurch gekennzeichnet, dass** ein niedriges Intervall (INT1) zwischen zwei aufeinanderfolgenden Teilstrichen (81, 82) des Abschnitt geringer Höhe (40) eine niedrige tatsächliche Höhe darstellt, und ein mittleres Intervall (INT2) zwischen zwei aufeinanderfolgenden Teilstrichen (83, 84) des Abschnitts mittlerer Höhe (50) eine mittlere tatsächliche Höhe darstellt, die größer als die niedrige tatsächliche Höhe ist.

4. Höhenanzeiger nach einem der Ansprüche 1 bis 3,
**dadurch gekennzeichnet, dass** der Abschnitt geringer Höhe (40) größere (82) und kleinere (81) Markierungen der Teilungen (80) aufweist, dass der Abschnitt mittlerer Höhe (50) kürzere (83) und längere (84) Markierungen der Teilungen (80) aufweist, und dass die kürzeren Markierungen (83) eine andere Form haben als die kleineren Markierungen (81).

5. Höhenanzeiger nach einem der Ansprüche 1 bis 4,
**dadurch gekennzeichnet, dass** die mehreren Skalenabschnitte (33) einen Abschnitt großer Höhe (60) mit einem dritten Maßstabsfaktor umfassen, dass der Abschnitt großer Höhe (60) von der zweiten Höhe (H2) zu einer dritten Höhe (H3) reicht, dass der dritte Maßstabsfaktor kleiner als der zweite Maßstabsfaktor ist, und dass die zweite Höhe (H2) kleiner als die dritte Höhe (H3) ist.

6. Höhenanzeiger nach Anspruch 5,
**dadurch gekennzeichnet, dass** ein mittleres Intervall (INT2) zwischen zwei aufeinanderfolgenden Teilstrichen (80) des Abschnitts mittlerer Höhe (50) eine mittlere tatsächliche Höhe darstellt, und ein hohes Intervall (INT3) zwischen zwei aufeinanderfolgenden Teilstrichen (80) des Abschnitts großer Höhe (60) eine große tatsächliche Höhe darstellt, die größer als die mittlere tatsächliche Höhe ist.

7. Höhenanzeiger nach einem der Ansprüche 5 bis 6,
**dadurch gekennzeichnet, dass** die Höhenskala (30) einen nicht skalierten Abschnitt (34) jenseits der dritten Höhe (H3) umfasst.

8. Höhenanzeiger nach einem der Ansprüche 1 bis 7,
**dadurch gekennzeichnet, dass** die Steuerung (20) und die Anzeige (15) konfiguriert sind, um eine Zahl (39), die eine aktuelle Höhe angibt, zumindest so lange gegenüber dem Zeiger (35) anzuzeigen, wie die aktuelle Höhe des Luftfahrzeugs (1) unterhalb eines vorgegebenen Schwellenwerts liegt.

9. Höhenanzeiger nach einem der Ansprüche 1 bis 8,
**dadurch gekennzeichnet, dass** die Steuerung (20) und die Anzeige (15) konfiguriert sind, um gegenüber zwei Teilstrichen (80), die sich auf beiden Seiten des Zeigers (35) befinden, die diesen beiden Teilstrichen entsprechenden Höhen anzuzeigen.

10. Höhenanzeiger nach einem der Ansprüche 1 bis 9,
**dadurch gekennzeichnet, dass** die Steuerung (20) und die Anzeige (15) konfiguriert sind, um mindestens ein Symbol gegenüber der Höhenskala (30) zu positionieren, wobei das mindestens eine Symbol fest mit der Höhenskala (30) verbunden ist, wobei das mindestens eine Symbol mindestens eines der folgenden Symbole umfasst: ein Symbol für die Landeentscheidungshöhe (91), das eine Schwellenhöhe für die Landeentscheidung darstellt, ein Symbol für die Missionsentscheidungshöhe (92), das eine Untergrenze für die Missionshöhe darstellt, ein Symbol für die automatische Steuerung (88, 89), das eine Sollhöhe für die automatische Steuerung darstellt.

11. Höhenanzeiger nach Anspruch 10,
**dadurch gekennzeichnet, dass** das mindestens eine Symbol ein Symbol für die Landeentscheidungshöhe (91) umfasst, wobei das Symbol für die Landeentscheidungshöhe (91) in Abhängigkeit von einer aktuellen Höhe variiert, wobei das Symbol für die Landeentscheidungshöhe (91) eine erste Form (911) hat, wenn die aktuelle Höhe größer als die Schwellenhöhe für die Landeentscheidung ist, und das Symbol für die Landeentscheidungshöhe (91) eine zweite Form (912) hat, wenn die aktuelle Höhe kleiner als die Schwellenhöhe für die Landeentscheidung oder gleich der Schwellenhöhe für die Landeentscheidung ist.

12. Höhenanzeiger nach einem der Ansprüche 10 bis 11,
**dadurch gekennzeichnet, dass** das mindestens eine Symbol ein Symbol für die Landeentscheidungshöhe (91) und ein Symbol für die Missionsentscheidungshöhe (92) umfasst, das eine Untergrenze für die Missionshöhe darstellt, wobei die Steuerung (20) und die Anzeige (15) konfiguriert sind, um in einem zweiten Anzeigebereich (152) der Anzeige (15), der sich von einem die Höhenskala (30) anzeigenden ersten Anzeigebereich (151) unterscheidet, zu positionieren: eine erste Markierung (93), wenn die aktuelle Höhe kleiner ist als die Missionshöhenuntergrenze plus eine zweite Markierung (94), wenn die aktuelle Höhe kleiner ist als die Schwellenhöhe für die Landeentscheidung.

13. Luftfahrzeug (1) mit mindestens einem Höhenanzeiger (10) nach einem der Ansprüche 1 bis 12.

14. Luftfahrzeug nach Anspruch 13,
**dadurch gekennzeichnet, dass** das Luftfahrzeug (1) mindestens einen Höhensensor (2) umfasst, der mit dem Höhenanzeiger (10) verbunden ist.

## Claims

1. Height indicator (10) for an aircraft (1), said height indicator (10) being provided with a controller (20) controlling a display means (15), said controller and said display means (15) being configured to display a height scale (30) and a pointer (35),
said height scale (30) being able to move in relation to the pointer (35) along an axis (AX) on said display means (15), said height scale (30) being a piecewise linear scale (31), said piecewise linear scale (31) comprising a plurality of graduated sections (33) provided with graduations (80), each graduated section (33) having its own linear scale, each graduated section (33) having a scale factor different from a scale factor of another graduated section, each scale factor representing the quotient between a distance on said graduated section (33) along said axis (AX) and a corresponding actual height,
**characterised in that** said plurality of graduated sections (33) comprise a low-height section (40) having a first scale factor, the low-height section (40) ranging from a reference height (H0) to a first height (H1) greater than the reference height (H0), said plurality of graduated sections (33) comprising an intermediate-height section (50) having a second scale factor, the second scale factor being less than the first scale factor, the intermediate-height section (50) ranging from the first height (H1) to a second height (H2) greater than the first height (H1).

2. Height indicator according to claim 1,
**characterised in that** said height scale (30) is able to move in translation on said display means (15), only a part (32) of said height scale (30) comprising a current height (HCUR) being displayed at each instant on the display means (15).

3. Height indicator according to any one of claims 1 to 2,
**characterised in that** a low interval (INT1) between two successive graduations (81, 82) of the low-height section (40) represents an actual low height, and an intermediate interval (INT2) between two successive graduations (83, 84) of the intermediate-height section (50) represents an actual intermediate height which is greater than the actual low height.

4. Height indicator according to any one of claims 1 to 3,
**characterised in that** the low-height section (40) comprises major markers (82) and minor markers (81) of said graduations (80), the intermediate-height section (50) having short markers (83) and long markers (84) of said graduations (80), the short markers (83) being shaped differently to the minor markers (81).

5. Height indicator according to any one of claims 1 to 4,
**characterised in that** said plurality of graduated sections (33) comprise a high-height section (60) having a third scale factor, the high-height section (60) ranging from the second height (H2) to a third height (H3), the third scale factor being less than the second scale factor, the second height (H2) being less than the third height (H3).

6. Height indicator according to claim 5,
**characterised in that** an intermediate interval (INT2) between two successive graduations (80) of the intermediate-height section (50) representing an actual intermediate height, and a high interval (INT3) between two successive graduations (80) of the high-height section (60) represents an actual high height which is greater than the actual intermediate height.

7. Height indicator according to any one of claims 5 to 6,
**characterised in that** said height scale (30) comprises an ungraduated section (34) beyond the third height (H3).

8. Height indicator according to any one of claims 1 to 7,
**characterised in that** said controller (20) and said display means (15) are configured to display a number (39) carrying a current height opposite the pointer (35) at least as long as said current height of the aircraft (1) is less than a predetermined threshold.

9. Height indicator according to any one of claims 1 to 8,
**characterised in that** said controller (20) and said display means (15) are configured to display, opposite two graduations (80) situated either side of the pointer (35), the heights corresponding to these two graduations.

10. Height indicator according to any one of claims 1 to 9,
**characterised in that** said controller (20) and said display means (15) are configured to position at least one symbol opposite the height scale (30), said at least one symbol being integral with the height scale (30), said at least one symbol comprising at least one of the following symbols: a landing decision height symbol (91) representing a threshold landing decision height, a mission decision height symbol (92) representing a mission height floor, an autopilot symbol (88, 89) representing an autopilot setpoint height.

11. Height indicator according to claim 10,
**characterised in that** said at least one symbol comprises a landing decision height symbol (91), said landing decision height symbol (91) varies as a function of a current height, said landing decision height symbol (91) having a first shape (911) when the current height is greater than the threshold landing decision height, said landing decision height symbol (91) having a second shape (912) when the current height is less than or equal to the threshold landing decision height.

12. Height indicator according to any one of claims 10 to 11,
**characterised in that** said at least one symbol comprises a landing decision height symbol (91) and a mission decision height symbol (92) representing a mission height floor, said controller (20) and said display means (15) are configured to position, in a second display zone (152) of said display means (15) separate from a first display zone (151) displaying said height scale (30): a first mark (93) when the current height is less than the mission height floor plus a second mark (94) when the current height is less than the threshold landing decision height.

13. Aircraft (1) comprising at least one height indicator (10) according to any one of claims 1 to 12.

14. Aircraft according to claim 13,
**characterised in that** said aircraft (1) comprises at least one height sensor (2) connected to the height indicator (10).
